# EUROPÄISCHE PATENTSCHRIFT

(11) **EP 1 644 172 B1**
(45) Veröffentlichungstag und Bekanntmachung des Hinweises auf die Patenterteilung: **23.09.2009**
(21) Anmeldenummer: 04731321.8
(22) Anmeldetag: 06.05.2004
(51) Int. Cl.: B29C 41/26

(54) **DIREKTBESCHICHTUNGSVERFAHREN UND -VORRICHTUNG**
DIRECT COATING METHOD AND APPARATUS
PROCEDE ET DISPOSITIF D'ENDUCTION DIRECTE

(30) Priorität: 04.06.2003 DE 10325140
(43) Veröffentlichungstag der Anmeldung: 12.04.2006
(73) Patentinhaber: LTS LOHMANN Therapie-Systeme AG, 56626 Andernach (DE)
(72) Erfinder: HORSTMANN, Michael, 56564 Neuwied (DE)
(74) Vertreter: Schmidt, Werner
(86) Internationale Anmeldenummer: PCT/EP2004/004792
(87) Internationale Veröffentlichungsnummer: WO 2004/108386

(56) Entgegenhaltungen:
- GB-A- 396 424
- US-A- 2 097 593
- US-A- 2 923 979
- US-A- 3 045 289
- PATENT ABSTRACTS OF JAPAN Bd. 0112, Nr. 58 (M-618), 21. August 1987 (1987-08-21) -& JP 62 064514 A (FUJI PHOTO FILM CO LTD), 23. März 1987 (1987-03-23)

## Beschreibung

Die Erfindung betrifft ein Verfahren zur Herstellung folienförmiger erstarrender Substanzen aus zunächst fließfähigen Ausgangssubstanzen in einer hierfür gestalteten Vorrichtung sowie eine Vorrichtung hierfür.

Die Substanzen sind beispielsweise pharmazeutische Zubereitungen, die sich aus einem ursprünglich fließfähigen Zustand verfestigen. Sie können z.B. pharmazeutischer Wirk- und/oder Aromastoffe beinhalten. Beim Trocknen erstarren diese Massen ggf. gallertartig, beispielsweise dicken sie ein und verfestigen sich. Das folienförmige Endprodukt kann dabei elastisch oder plastisch verformbar sein.

Es ist eine Trocknungskammer bekannt, in der eine fließfähige Substanz getrocknet wird, die auf ein papierartiges polyethylenbeschichtetes bahnförmiges Trägermaterial aufgebracht ist. Dieses papierartige Trägermaterial ist teuer und kann nur einmal verwendet werden. Außerdem birgt es die Gefahr des Insektenbefalls oder anderer Verunreinigungen.

Aus der US 4,562,020 ist ein Verfahren zur Trocknung glukosehaltiger Lösungen auf einem endlosen Kunststoffband bekannt. Die Stärke des Films, der sich nach der Trocknung vom Kunststoffband ablöst, variiert stark.

Aus der JP 62 064 514 A ist ein Herstellungsverfahren für Folien bekannt. Eine flüssige Substanz wird mittels einer nicht einstellbaren Düse auf einen stationären Träger geschüttet. Der auf der Trägeroberfläche verteilte Flüssigkeitsfilm wird mit Kaltluft angeströmt, um seine Oberfläche partiell zu trocknen.

Aus der US 4,306,059 ist ein Verfahren zur Erzeugung eines Films bekannt, bei dem eine flüssige Substanz auf eine vorgeheizte, chromplattierte Rolle aufgebracht wird.

Der vorliegenden Erfindung liegt daher die Aufgabe zugrunde, ein kostengünstiges Verfahren und eine Vorrichtung zur Herstellung folienförmiger gallertartig erstarrender Substanzen mit geringen Abweichungen der Materialstärke aus fließfähigen Ausgangssubstanzen zu entwickeln.

Diese Problemstellung wird mit den Merkmalen der unabhängigen Ansprüche 1 und 9 gelöst. Dazu wird ein kontinuierlich fördernder, inerter Träger, der Teil der Vorrichtung ist, mit den Ausgangssubstanzen beschichtet. Mittels einer Dosiervorrichtung wird die Dicke der den Träger beschichtenden Ausgangssubstanzen eingestellt. Der nun beschichtete Träger fördert die Substanzenschicht durch eine Trocknungseinrichtung. Nach Beendigung des Trocknungsvorgangs löst die getrocknete Substanzschicht sich vom Träger oder wird von diesem gelöst.

Der inerte Träger tritt während des Verfahrens mit den Ausgangssubstanzen in Kontakt, ohne mit diesen zu reagieren. Der Werkstoff des Trägers wird bei diesem Kontakt weder chemisch noch physikalisch oder biologisch angegriffen oder verändert.

Der Träger kann beispielsweise eine rotierende Walze oder ein umlaufendes, endloses Band sein, auf den die Ausgangssubstanz aufgebracht wird oder der die Ausgangssubstanz aufnimmt. Nach der Trocknung der Substanz auf dem Träger löst diese sich vom Träger oder kann von diesem abgelöst werden. Der Träger selbst erfordert keine Nachbehandlung und kann sofort wieder zur Aufnahme weiterer Ausgangssubstanzen eingesetzt werden.

Die Dicke der Beschichtung des Trägers wird mittels einer Dosiervorrichtung eingestellt. Die Dosiervorrichtung kann beispielsweise eine einstellbare Auslassöffnung eines Vorratsbehälters, eine Dosierwalze etc. sein. Beim Einsatz einer Dosierwalze ist z.B. deren Abstand zum inerten Träger einstellbar. Auf dem inerten Träger wird eine Beschichtung zumindest annähernd konstanter Stärke erzeugt. Das Endprodukt hat eine gleichförmige Dicke. Die Abweichungen der Dicke in Längs- und Querrichtung der Folienausdehnung sind gering.

Bei diesem Verfahren fällt kein Verbrauchsmaterial an, das kostenaufwendig beschafft werden müsste und nach dem Herstellungsprozess wieder entsorgt werden müsste. Hierdurch ist das Verfahren besonders bei intensiv genutzten Herstellungsanlagen kostengünstig.

Weitere Einzelheiten der Erfindung ergeben sich aus den Unteransprüchen und der nachfolgenden Beschreibung schematisch dargestellter Ausführungsformen.
- Figur 1:: Schnitt durch eine Vorrichtung zur Herstellung folienförmiger Substanzen;
- Figur 2:: Schnitt durch eine Vorrichtung mit einem anderem Substanzbad.

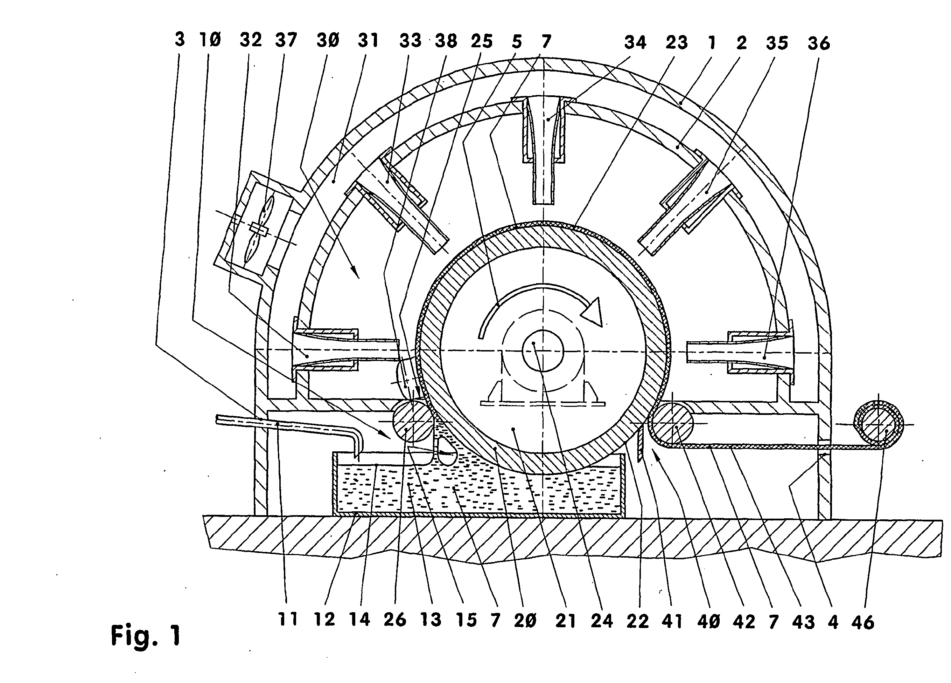

Die Figur 1 zeigt einen Schnitt durch eine Vorrichtung zur Herstellung folienförmiger Substanzen (7, 43) aus einer fließfähigen Ausgangssubstanz (7, 13).

Die Vorrichtung ist in einem feststehenden äußeren Gehäuse (1) angeordnet und umfasst eine Aufgabestelle (10), einen Träger (20), eine Trocknungseinrichtung (30) und einen Abtrennbereich (40).

An der Aufgabestelle (10) wird die fließfähige Ausgangssubstanz (7, 13) auf den Träger (20) als Substanzschicht (7, 23) aufgebracht und mittels einer Dosiervorrichtung (25) dosiert. In der Trocknungseinrichtung (30) wird die Substanzschicht (7, 23) getrocknet. Im Abtrennbereich (40) löst sie sich filmartig vom Träger (20) oder wird von diesem gelöst und als folienförmige Substanz (7, 43) der Weiterverarbeitung zugeleitet.

Die Aufgabestelle (10) umfasst beispielsweise eine Zuflussleitung (11) mit der eine angesetzte fließfähige Ausgangssubstanz (7, 13) in einen innerhalb des Gehäuses (1) angeordneten Vorratsbehälter (12) gefördert wird. Die fließfähige Ausgangssubstanz (7, 13) kann z.B. bis auf 40% Feststoffanteil angereichert sein.

Statt mittels einer Zuflussleitung (11) kann die Ausgangssubstanz (7, 13) auch unmittelbar in einem Vorratsbehälter (12) angesetzt werden, der dann in das Gehäuse (1) eingesetzt wird. Auch ein Ansatz in einem separaten Behälter, der mit dem Vorratsbehälter (12) kommuniziert, ist denkbar,

Der Träger (20) ist beispielsweise eine Walze (20) aus einem metallischen Werkstoff, der resistent gegen chemische Reaktionen ist und physikalisch beständig ist. Dieser Werkstoff kann z.B. ein korrosionsbeständiger Stahl sein.

Die Walze (20) ist beispielsweise ein Hohlzylinder. Ihr Außendurchmesser beträgt z.B. etwa drei Meter, ihre Länge quer zur Förderrichtung (5) etwa 1,8 Meter. An ihrer Stirnseite befindet sich eine hier nicht dargestellte Antriebseinheit. Diese umfasst beispielsweise einen Elektromotor, der z.B. über ein Getriebe hoher Übersetzung die Walze (20) antreibt.

Der Innenraum (21) der Walze (20) kann eine Heizgasöffnung (24) aufweisen, mit der z.B. erwärmte Luft zur Innenbeheizung der Walze (20) zugeführt werden kann.

Die Trocknungseinrichtung (30) umfasst einen Verdichter (37) und eine nicht dargestellte Heizung sowie einen Verteilungskanal (31), der zwischen dem äußeren Gehäuse (1) und einem inneren Gehäuse (2) angeordnet ist. Im inneren Gehäuse sind beispielsweise fünf Düsen (32 - 36) angeordnet. Jede dieser Düsen (32 - 36) ist zentripetal zur Walze (20) ausgerichtet, so dass die einzelne Düse (32 - 36) normal zu jeweils einer gedachten Tangentialebene an der Oberfläche (22) der Walze steht. Die Länge jeder einzelnen Düse (32 - 36) quer zur Förderrichtung (5) entspricht zumindest annähernd der Länge der Walze (20). Durch den Luftverteilungskanal (31) und die Düsen (32 - 36) wird ein Trocknungsmedium vom Verdichter zumindest bis auf die Substanzschicht (7, 23) zwangsgeführt und in eine Abluftöffnung (38) abgeleitet. Von hier aus kann das Trocknungsmedium z.B. über Vorrichtungen zur Be- oder Entfeuchtung des Trocknungsmediums wieder dem Verdichter (37) zugeleitet werden.

Der Luftverteilungskanal (31) kann mehrteilig sein. So kann z.B. jede der Düsen (32 - 36) mit speziell aufbereitetem Trocknungsmedium versorgt werden. Das durch die einzelnen Düsen (32 - 36) strömende Trocknungsmedium kann dann z.B. einen unterschiedlichen Volumenstrom und/oder eine unterschiedliche Temperatur haben.

Der Abtrennbereich (40) umfasst z.B. eine Abtrennvorrichtung (41) zum Abschälen der Substanzschicht (7, 23) von der Walze (20) und beispielsweise eine Leitwalzen (42). Die Abtrennvorrichtung (41) hat z.B. die Form eines Messers und schließt mit einer gedachten Tangentialebene an der Oberfläche (22) der Walze (20) einen spitzen Winkel ein.

Zu Beginn der Herstellung der folienförmigen Substanz (7, 43) ist der Vorratsbehälter (12) mit fließfähiger Ausgangssubstanz (7, 13) soweit gefüllt, dass die Oberfläche (22) der Walze (20) die Oberfläche (14) der Ausgangssubstanz (7, 13) kontaktiert oder in diese eintaucht.

Nach dem Einschalten der Antriebseinheit rotiert die Walze (20) beispielsweise mit konstanter Drehzahl. Die Umfangsgeschwindigkeit an der Oberfläche (22) der Walze (20) beträgt dann z.B. 10 m/min.

Die fließfähige Ausgangssubstanz (7, 13) wird durch die rotierende Walze (20) aus dem Vorratsbehälter (12) durch Benetzen aufgenommen, haftet auf dieser als Beschichtung und wird von der Walze (20) mitgenommen.

Im Bereich der Aufgabestelle (10) ist die Dosiervorrichtung (25) angeordnet. Diese umfasst eine Dosier- oder Abstreifwalze (26), beispielsweise eine Rakelwalze (26). Der Abstand dieser Rakelwalze (26) zur Walze (20) ist einstellbar. Mit dieser Rakelwalze (26) wird die aufgenommene Ausgangssubstanz (7, 13) gleichmäßig auf der Oberfläche (22) der Walze (20) verteilt. Überschüssige Ausgangssubstanz (7, 13) tropft z.B. an einem Rakelgitter ab und fließt zurück in den Vorratsbehälter (12).

Je nach Länge der Walze (20) kann die Dosierwalze (26) ein- oder mehrfach mittels Lagern abgestützt sein. Hiermit werden Ungenauigkeiten der Stärke der Substanzschicht (7, 23) aufgrund der Durchbiegung der Dosierwalze (26) vermieden. Auch die parallele Anordnung mehrerer Dosierwalzen (26) ist denkbar.

Die verbleibende Beschichtung der Walze (20) ist eine Substanzschicht (7, 23) konstanter Stärke von z.B. 0,3 mm, die an der Walze (20) haftet. Bei der weiteren Rotation der Walze (20) wird die Substanzschicht (7, 23) in die Trocknungseinrichtung (30) gefördert. Die Trocknungseinrichtung ist z.B. durch eine waagerecht liegende Gehäusewand vom Vorratsbehälter (12) getrennt.

In der Trocknungseinrichtung (30) wird auf z.B. 95°C aufgeheiztes Trocknungsmedium, beispielsweise entfeuchtete Luft, durch den Verdichter in den Verteilerkanal (31) gefördert. Durch die Düsen (32 - 36) strömt das Trocknungsmedium in normaler Richtung auf die Substanzschicht (7, 23) und gegebenenfalls zu einem Sammler. Hierbei wird der Substanzschicht (7, 23) Feuchtigkeit entzogen und diese auf einen Restfeuchtigkeitsgrad getrocknet. Die Substanzschicht (7, 23) erstarrt dabei gallertartig.

Bei einer getrennten Versorgung der Düsen (32 - 36) kann der Trocknungsvorgang z.B. so gesteuert werden, dass im Bereich der ersten Düse (32) z.B. mehr Feuchtigkeit entzogen wird als im Bereich der letzten Düse (36) oder umgekehrt.

Mit abnehmender Feuchtigkeit der Substanzschicht (7, 23) verringert sich beispielsweise ihre Haftung auf der Walze (20). Nach Beendigung des Trocknungsvorgangs, ab einer substanzspezifischen Restfeuchtigkeit, löst sich die Substanzschicht (7, 23) von der Walze (20). Gegebenfalls kann der Anfang der Substanzschicht (7, 23) mit der Abtrennvorrichtung (41) von der Walze (20) abgehoben werden. Die von der Walze (20) abgehobene Substanzschicht (7, 23) ist jetzt eine folienförmige und filmartige Substanz (7, 43). Diese wird mit Hilfe der Leitwalze (42) zur Aufwickelwalze (46) transportiert. Von dort wird die folienförmige Substanz (7, 43) zur Weiterverarbeitung, z.B. zum Schneiden oder zum Vereinzeln gebracht.

Die Walze (20) kann von innen beheizt sein. So kann der Trocknungsprozess der Substanz (7, 23) auf der Walze (20) beschleunigt werden und das Ablösen der folienförmigen Substanz (7, 43) von der Walze (20) verbessert werden.

Die Drehzahl der Walze (20) kann fest sein oder einstellbar sein. So kann z.B. bei einer Anlage, auf der unterschiedliche Substanzen (7) hergestellt werden, für jede Substanz (7) spezifische Umfangsgeschwindigkeiten eingestellt werden. Die folienförmige Substanz (7, 43) weist dann jeweils die erforderlichen chemischen und physikalischen Eigenschaften auf.

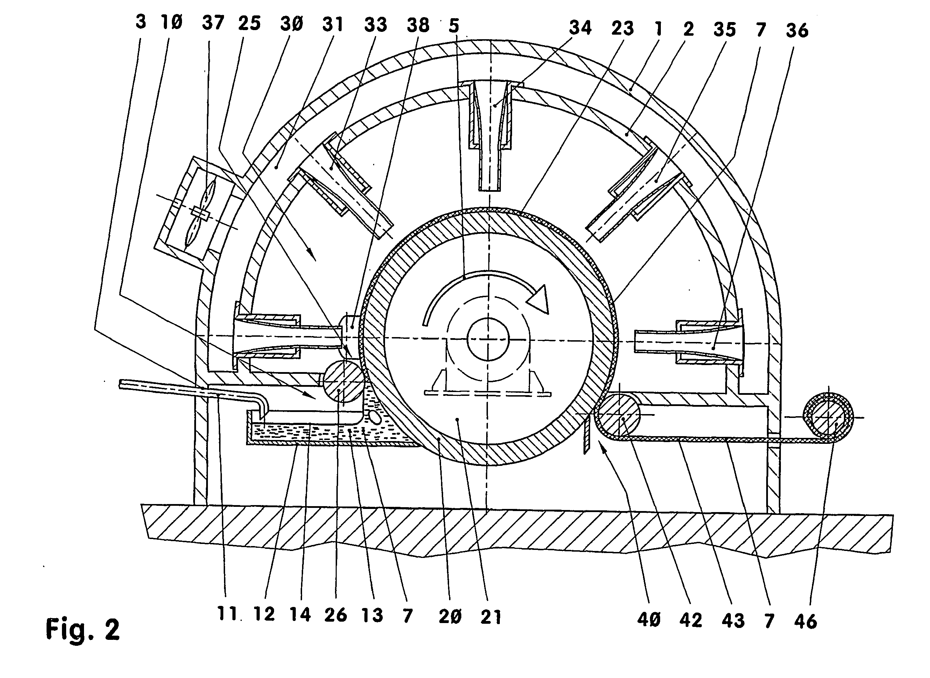

Die Figur 2 zeigt eine Vorrichtung mit einem anderen Substanzbad. Der Vorratsbehälter (12) ist hier im vierten Quadranten der Walze (20) angeordnet. Zur Walze (20) hin ist der Vorratsbehälter (12) offen, so dass die fließfähige Ausgangssubstanz (7, 13) direkt an der Walze (20) ansteht. Das Bad der Ausgangssubstanz (7, 13) ist flach, so dass die Ausgangssubstanz (7, 13) zwischen dem Ausfluss aus der Zuflussleitung (11) und der Aufnahme durch die Walze (20) nur kurze Zeit im Vorratsbehälter (7, 13) verweilt. Somit ist die Gefahr der Verdunstung flüchtiger Bestandteile der Ausgangssubstanz (7, 13) gering und die Gefahr einer Zersetzung der Ausgangssubstanz (7, 13) vermindert.

Bezugszeichenliste:
- 1: Äußeres Gehäuse
- 2: Inneres Gehäuse
- 3: Gehäusedurchbruch
- 4: Gehäusedurchbruch
- 5: Förderrichtung

- 7: Substanz

- 10: Aufgabestelle
- 11: Zuflussleitung
- 12: Vorratsbehälter
- 13: fließfähige Ausgangssubstanz
- 14: Oberfläche von (13)
- 15: Beschichten

- 20: Träger, Walze
- 21: Innenraum von (20)
- 22: Oberfläche von (20)
- 23: Substanzschicht
- 24: Heizgasöffnung
- 25: Dosiervorrichtung
- 26: Dosierwalze, Abstreifwalze, Rakelwalze

- 30: Trocknungseinrichtung
- 31: Verteilungskanal
- 32 - 36: Düsen
- 37: Verdichter
- 38: Abluftöffnung

- 40: Abtrennbereich
- 41: Abtrennvorrichtung
- 42: Leitwalze
- 43: folienförmige Substanz
- 46: Aufwickelwalze

## Patentansprüche

1. Verfahren zur Herstellung folienförmiger erstarrender Substanzen (7, 43) aus zunächst fließfähigen Ausgangssubstanzen (7, 13) in einer hierfür gestalteten Vorrichtung,
- wobei ein kontinuierlich fördernder, inerter Träger (20), der Teil der Vorrichtung ist, an einer Aufgabestelle (10) mit den Ausgangssubstanzen (7, 13) beschichtet wird,
- wobei mittels einer Dosiervorrichtung (25) die Dicke der den Träger (20) beschichtenden Ausgangssubstanzen (7,13) eingestellt wird,
- wobei der beschichtete Träger (20) die Substanzenschicht (7, 23) durch eine von der Aufgabestelle (10) getrennte Trocknungseinrichtung (30) fördert, und
- wobei die getrocknete Substanzschicht (7, 43) sich vom Träger (20) löst oder von diesem gelöst wird.

2. Verfahren nach Anspruch 1, **dadurch gekennzeichnet, dass** eine Walze (20) mit den Ausgangssubstanzen (7, 13) beschichtet wird.

3. Verfahren nach Anspruch 2, **dadurch gekennzeichnet, dass** die Walze (20) mit konstanter Umfangsgeschwindigkeit rotiert.

4. Verfahren nach Anspruch 2, **dadurch gekennzeichnet, dass** die Walze (20) von innen beheizt wird.

5. Verfahren nach Anspruch 3, **dadurch gekennzeichnet, dass** die rotierende Walze (20) die fließfähige Ausgangssubstanz (7, 13) in einem Vorratsbehälter (12) kontaktiert und benetzend aufnimmt und überschüssige Ausgangssubstanz (7, 13) mittels einer Dosiervorrichtung (25) abgestreift wird.

6. Verfahren nach Anspruch 1, **dadurch gekennzeichnet, dass** in der Trocknungseinrichtung (30) ein Trocknungsmedium zwangsgeführt bewegt wird, das den beschichteten Träger (20) normal anströmt.

7. Verfahren nach Anspruch 6, **dadurch gekennzeichnet, dass** das zuströmende Trocknungsmedium durch mindestens zwei normal zum Träger (20) ausgerichtete Düsen (32 - 36) geführt wird.

8. Verfahren nach Anspruch 7, **dadurch gekennzeichnet, dass** der Volumenstrom und/oder die Temperatur des zuströmenden Trocknungsmediums mindestens zweier Düsen (32 - 36) unterschiedlich ist.

9. Vorrichtung zur Herstellung folienförmiger, erstarrender Substanzen (7, 43) aus fließfähigen Ausgangssubstanzen (7, 13), die eine Aufgabestelle (10) zur Aufgabe der Ausgangssubstanzen (7, 13) auf einen beweglichen Träger (20), eine Dosiervorrichtung (25) zur Einstellung der Dicke der den Träger (20) beschichtenden Ausgangssubstanzen (7, 13) und eine von der Aufgabestelle (10) getrennte Trocknungseinrichtung (30) zur Trocknung der Ausgangssubstanzen (7, 13) umfasst, wobei
der Träger (20) aus einem metallischem Werkstoff besteht, der resistent gegen chemische Reaktionen ist und physikalisch beständig ist.

10. Vorrichtung nach Anspruch 9, **dadurch gekennzeichnet, dass** der Träger eine Walze (20) ist.

11. Vorrichtung nach Anspruch 9, **dadurch gekennzeichnet, dass** sie ein Gehäuse (1, 2) umfasst, in dem ein Trocknungsmedium zwangsgeführt normal zum Träger (20) zugeführt wird und quer zur Förderrichtung (5) abgeführt wird.

12. Vorrichtung nach Anspruch 11, **dadurch gekennzeichnet, dass** das zuströmende Trocknungsmedium durch mindestens zwei normal zum Träger (20) ausgerichtete Düsen (32 - 36) geführt wird,
wobei die Länge der einzelnen Düse quer zur Förderrichtung (5) zumindest annähernd der Länge des Trägers (20) quer zur Förderrichtung (5) entspricht.

## Claims

1. Method for producing film-like solidifying substances (7, 43) from initially free-flowing starting substances (7, 13) in a suitably configured apparatus,
- in which a continuously moving, inert carrier (20), which forms part of the apparatus, is coated, at an application point (10), with the starting substances (7, 13),
- in which the thickness of the starting substances (7, 13) which coat the carrier (20) is set by means of a metering apparatus (25),
- in which the coated carrier (20) moves the substance layer (7, 23) through a drying device (30), separate from the application point (10), and
- in which the dried substance layer (7, 43) becomes detached or is detached from the carrier (20).

2. Method according to Claim 1, **characterized in that** a roller (20) is coated with the starting substances (7, 13).

3. Method according to Claim 2, **characterized in that** the roller (20) rotates at a constant circumferential velocity.

4. Method according to Claim 2, **characterized in that** the roller (20) is internally heated.

5. Method according to Claim 3, **characterized in that** the rotating roller (20) comes into contact with the free-flowing starting substance (7, 13) in a reservoir (12), picks up the free-flowing starting substance by being wetted with it, and then excess starting substance (7, 13) is stripped off by means of a metering apparatus (25).

6. Method according to Claim 1, **characterized in that** a drying medium is moved forcibly within the drying device (30) so that it flows perpendicularly onto the coated carrier (20).

7. Method according to Claim 6, **characterized in that** the drying medium which flows in is passed through at least two nozzles (32 - 36) oriented perpendicular to the carrier (20).

8. Method according to Claim 7, **characterized in that** the volumetric flow and/or the temperature of the drying medium which flows in from at least two nozzles (32 - 36) differs.

9. Apparatus for producing film-like, solidifying substances (7, 43) from free-flowing starting substances (7, 13) which comprises an application point (10) for applying the starting substances (7, 13) to a moveable carrier (20), a metering apparatus (25) for setting the thickness of the starting substances (7, 13) which coat the carrier (20), and a drying device (30), separate from the application point (10), for drying the starting substances (7, 13), wherein the carrier (20) consists of a metallic material which is resistant to chemical reactions and is physically durable.

10. Apparatus according to Claim 9, **characterized in that** the carrier is a roller (20).

11. Apparatus according to Claim 9, **characterized in that** it comprises a housing (1, 2) in which a drying medium is fed forcibly perpendicular to the carrier (20) and is discharged transversely with respect to the direction of movement (5).

12. Apparatus according to Claim 11, **characterized in that** the drying medium which flows in is passed through at least two nozzles (32 - 36) which are oriented perpendicular to the carrier (20), the length of the individual nozzle transversely to the direction of movement (5) at least approximately corresponding to the length of the carrier (20) transversely to the direction of movement (5).

## Revendications

1. Procédé de fabrication de substances (7, 43) se solidifiant en forme de films constituées de substances de départ (7, 13) initialement coulantes, dans un dispositif configuré à cet effet,
- un support inerte (20), en déplacement constant, qui fait partie du dispositif, étant revêtu au niveau d'une zone de chargement (10), avec les substances de départ (7, 13),
- l'épaisseur des substances de départ (7, 13) recouvrant le support (20) étant ajustée au moyen d'un dispositif de dosage (25),
- le support revêtu (20) transportant la couche de substances (7, 23) à travers un dispositif de séchage (30) séparé de la zone de chargement (10), et
- la couche de substances (7, 43) séchée se détachant du support (20) ou étant détachée du support.

2. Procédé selon la revendication 1, **caractérisé en ce qu'**un rouleau (20) est revêtu avec les substances de départ (7, 13).

3. Procédé selon la revendication 2, **caractérisé en ce que** le rouleau (20) tourne à une vitesse de rotation constante.

4. Procédé selon la revendication 2, **caractérisé en ce que** le rouleau (20) est chauffé de l'intérieur.

5. Procédé selon la revendication 3, **caractérisé en ce que** le rouleau rotatif (20) vient en contact avec la substance de départ coulante (7, 13) dans un récipient de réserve (12) et la reçoit en la mouillant, et la substance de départ en excès (7, 13) est raclée au moyen d'un dispositif de dosage (25).

6. Procédé selon la revendication 1, **caractérisé en ce qu'**un fluide de séchage est déplacé par guidage forcé dans le dispositif de séchage (30) et afflue de façon perpendiculaire sur le support revêtu (20).

7. Procédé selon la revendication 6, **caractérisé en ce que** le fluide de séchage affluant est guidé par au moins deux buses (32 - 36) orientées perpendiculairement au support (20).

8. Procédé selon la revendication 7, **caractérisé en ce que** le courant volumique et/ou la température du fluide de séchage affluant d'au moins deux buses (32 - 36) sont différents.

9. Dispositif pour fabriquer des substances (7, 43) se solidifiant en forme de film constituées de substances de départ (7, 13) coulantes, qui comprend une zone de chargement (10) pour le chargement des substances de départ (7, 13) sur un support déplaçable (20), un dispositif de dosage (25) pour ajuster l'épaisseur des substances de départ (7, 13) revêtant le support (20) et un dispositif de séchage (30) séparé de la zone de chargement (10) pour le séchage des substances de départ (7, 13), le support (20) se composant d'un matériau métallique qui est résistant vis-à-vis des réactions chimiques et qui est résistant physiquement.

10. Dispositif selon la revendication 9, **caractérisé en ce que** le support est un rouleau (20).

11. Dispositif selon la revendication 9, **caractérisé en ce qu'**il comprend un boîtier (1, 2) dans lequel est acheminé un fluide de séchage guidé de manière forcée, perpendiculairement au support (20), lequel fluide est évacué transversalement à la direction de transport (5).

12. Dispositif selon la revendication 11, **caractérisé en ce que** le fluide de séchage affluant est guidé par au moins deux buses (32 - 36) orientées perpendiculairement au support (20), la longueur des buses individuelles transversalement à la direction de transport (5) correspondant approximativement à la longueur du support (20) transversalement à la direction de transport (5).
